## Europäisches Patentamt

(19) **European Patent Office**

**Office européen des brevets**

(11) Veröffentlichungsnummer: **0 081 220**
**B1**

(12) **EUROPÄISCHE PATENTSCHRIFT**

(45) Veröffentlichungstag der Patentschrift:
**19.02.86**

(51) Int. Cl.⁴: **B 60 B 9/10,** B 60 B 9/00,
B 60 C 7/10

(21) Anmeldenummer: **82111244.8**

(22) Anmeldetag: **04.12.82**

(54) **Laufrolle für Apparate, Möbel od. dgl.**

(30) Priorität: **07.12.81 DE 3148313**

(43) Veröffentlichungstag der Anmeldung:
**15.06.83 Patentblatt 83/24**

(45) Bekanntmachung des Hinweises auf die Patenterteilung:
**19.02.86 Patentblatt 86/8**

(84) Benannte Vertragsstaaten:
**AT BE CH FR GB IT LI LU NL SE**

(56) Entgegenhaltungen:
**DE - C - 65 474**
**DE - C - 66 733**
**FR - A - 898 303**
**FR - A - 1 278 131**
**US - A - 1 258 573**

(73) Patentinhaber: **Paul vom Stein & Co., Frohntaler Strasse 30, D-5632 Wermelskirchen (DE)**

(72) Erfinder: **Schröder, Dieter, Dorn 41, D-5632 Wermelskirchen 1 (DE)**

(74) Vertreter: **Sonnet, Bernd, Dipl.-Ing. et al, Patentanwälte Dipl.-Ing. Harald Ostriga Dipl.-Ing. Bernd Sonnet Stresemannstrasse 6-8 Postfach 20 13 27, D-5600 Wuppertal 2 (DE)**

ACTORUM AG

## Beschreibung

Die Erfindung bezieht sich auf eine Laufrolle für Apparate, Möbel od. dgl. mit mindestens einem auf einer Radfelge aufgezogenen Reifen, der von einer Vielzahl von radachsparallelen Ausnehmungen durchsetzt ist, deren Wände ggf. bis nahe an die Reifen-Innenfläche herangeführt sind.

Derartige Laufrollen sind als Fahrzeugräder, indbesondere Automobilräder z.B. aus der FR-A-1 278 131 bekannt. Hierbei handelt es sich konkret offenbar um metallische Räder nach Art von Speichenrädern, bei denen die Zwischenräume zwischen den Speichen die genannten radachsparallelen Ausnehmungen bilden. Nach einer Ausführung der FR-A-1 278 131 sind die Speichen mit dem Radkranz und der Felge einstückig ausgeführt.

Der Erfindung liegt im wesentlichen die Aufgabe zugrunde, eine Laufrolle der bekannten Art in einer zur Verwendung an Apparaten, Möbel od. dgl. besonders geeigneten Weise weiterzubilden, insbesondere eine Laufrolle zu schaffen, deren Reifen unter geringem Werkstoffaufwand hervorragende Verschleisseigenschaften und ein günstiges Elastizitätsverhalten aufweist. Ein weiterer Aspekt der Erfindung besteht darin, den Reifen so in die Felge einzubetten, dass er darin gegen Abspringen und unzulässige Verformungen besonders gesichert ist.

Die Erfindung löst diese Aufgabe einmal dadurch, dass der Reifen aus einem hochabriebfesten Elastomer wie Polyurethan (PU) besteht und die Ausnehmungen ausschliesslich innerhalb seines im Umfangsbereich der Felgenhörner angeordneten Abschnitts vorgesehen sind und zum anderen mit einer alternativen Ausführung dadurch, dass der Reifen aus einem hochabriebfesten Elastomer wie Polyurethan (PU) besteht und die Ausnehmungen, deren Wände Bestandteil der Reifen-Innenfläche sind, ausschliesslich innerhalb seines im Umfangsbereich der Felgenhörner angeordneten Abschnitts vorgesehen sind.

Aufgrund des hochabriebfesten Elastomers des Reifens wird in Verbindung mit den ihn radachsparallel durchsetzenden Ausnehmungen ein relativ dünner, aber trotz seines geringen Werkstoffaufwandes hervorragende Federungseigenschaften aufweisender Reifen zur Verfügung gestellt. Dadurch, dass die Ausnehmungen ausschliesslich innerhalb des Umfangsbereichs der Felgenhörner angeordnet sind, wird gewährleistet, dass in die Ausnehmungen kein Schmutz und sonstige Verunreinigungen eintreten können. Damit ist auch sichergestellt, dass sich die Ausnehmungen nicht in einer solchen Weise zusetzen können, dass die Federungseigenschaften des Reifens beeinträchtigt werden oder nicht mehr gewährleistet sind. Durch die dichte Zuordnung der Ausnehmungen zur Reifen-Innenfläche werden bei der Kompression des Reifens wirksame Querausdehnungen und damit Querkräfte auf ein Minimum reduziert, so dass die Felgenhörner durch seitliche Kräfte nicht oder nur sehr wenig belastet sind. Durch die seitliche Abschirmung des durchlochten Reifenbereichs dienen die Felgenhörner als seitliche Stützen im Verformungsbereich des Reifens, so dass eine gezielte Verformung der zwischen den Ausnehmungen verbleibenden Stege im Sinne des gewünschten Elastizitätsverhaltens hervorgerufen wird.

Aus der DE-B-1 806 146 ist es zwar an sich bekannt, einen aus Urethan bestehenden Rollenkörper zu verwenden und seine Feder- und Dämpfungswirkung durch im Rollenkörper angebrachte Ausnehmungen zu beeinflussen. Dieser bekannte Rollenkörper (Reifen) ist jedoch nicht in eine Felge eingebettet, sondern auf eine bund- bzw. hornlose Metallhülse aufgezogen. Die Ausnehmungen erstrecken sich nach aussen hin völlig offen in einem mittleren Bereich des in radialer Richtung sehr breiten Reifenringes. Auch durchsetzen die Ausnehmungen den Reifen nicht; die von beiden Stirnseiten des Reifens eingebrachten Ausnehmungen münden an einem mittleren Stegbereich. Im übrigen ist der Reifen dazu bestimmt, auf der Aussenseite noch mit einer Laufdecke versehen zu werden, um die Standfestigkeit zu erhöhen. Schliesslich verlaufen sämtliche zwischen den Ausnehmungen belassenen Stege in der Seitenansicht des Reifens (Fig. 5 der DE-B-1 806 146) jeweils zur gleichen Seite hin geneigt. Daher ist bei Belastung des Reifens dessen Verformung einseitig, was zu starken asymmetrischen Reifenverformungen und hohen Walkarbeiten führen kann.

Die DE-B-1 806 146 schlägt im Prinzip ein Rad mit einem durch Ausnehmungen elastisch gemachten Reifen vor, dessen Verschleissfestigkeit aber durch eine besondere aussen um den Reifen herumgelegte Laufdecke bewirkt wird. Der Gegenstand vorliegender Erfindung zielt darauf ab, einen dünnen Reifen zu verwenden, der selbst hochabriebfest ist und bei dem die Ausnehmungen bzw. die Stege zwischen diesen so angeordnet sind, dass eine asymmetrische Reifenbelastung vermieden wird und die überdies auch bei längerem Gebrauch des Reifens voll funktionsfähig bleiben. Die Konfiguration des aus der DE-B-1 806 146 bekannten Reifens eignet sich wie der erfindungsgemässe Reifen zur Einlagerung in ein Felgenbett dergestalt, dass die Felgenhörner die äusseren Öffnungen der Ausnehmungen abdecken, weil dann wegen der Kompression des Radreifens ein Lauf auf dem Umfang der Felgenhörner unvermeidbar wäre.

Eine Weiterbildung des im Anspruch 1 gekennzeichneten Erfindungsgegenstandes besteht darin, dass die in radialer Richtung gemessene Wandstärke des zwischen den Felgenhörnern liegenden Reifenabschnittes grösser oder höchstens gleich der Hälfte der gesamten Reifenwandstärke ist. Damit wird eine Laufrolle bereitgestellt, bei der ein grosser Reifenquerschnitt, der jedoch völlig im Felgenbett liegt, für die Federung und Dämpfung bereitgestellt wird, während der die äussere Lauffläche aufweisende Reifenabschnitt relativ dünn ist, wodurch der Rolle im übrigen ein hervorragendes äusseres Erscheinungsbild verliehen werden kann. Ausserdem wird durch diese Geometrie ein besonders sicherer Sitz des Reifens im Felgenbett erzielt.

Die zwischen je zwei Ausnehmungen angeordneten Stege können entweder im wesentlichen radial oder alternierend unter etwa gleich grossen Neigungswinkeln unterschiedlicher Richtung bezüglich der Radialen angeordnet sein. Hierdurch ergibt sich stets eine im wesentlichen radial wirkende Reifenkompression im Bereich der Reifenaufstandszone und eine Minimierung der Walkverlustarbeit.

Als vorteilhaft hat sich ein elastomerer Reifenwerkstoff erwiesen, der eine Härte von etwa 80 vis 90 Shore besitzt. Besonders hervorragende Eigenschaften hat ein spritzfähiges Polyurethan (PU).

Die Erfindung wird nachfolgend anhand eines in den Zeichnungen dargestellten Ausführungsbeispiels näher beschrieben. Es zeigen:

Fig. 1 einen Längsschnitt gemäss Schnittlinie I–I in Fig. 2 und

Fig. 2 die Ansicht eines Laufreifens, wobei eine Auswahl von Möglichkeiten der Ausbildung der Ausnehmungen dargestellt ist.

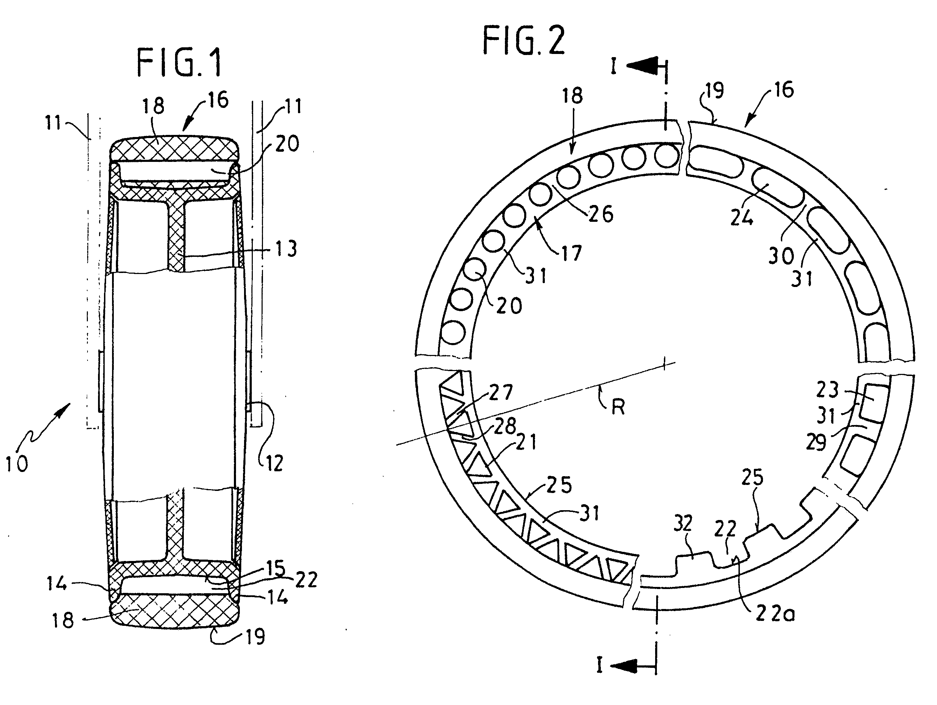

Ein insgesamt mit 10 bezeichnetes Laufrad nach Fig. 1 umfasst eine Radgabel, deren Gabelschenkel mit 11 bezeichnet sind. Die Gabelschenkel 11 lagern eine Radachse 12, auf der die Radfelge 13 frei rotieren kann. Die Radfelge 13 besitzt ein zwischen zwei Felgenhörnern 14 angeordnetes Felgenbett 15, in welchem ein Reifen 16 ruht.

Der kreisringförmige Reifen 16 besteht aus einem inneren Abschnitt 17 und einem äusseren Abschnitt 18. Die Breite (Fig. 1) des inneren Abschnittes 17 entspricht etwa der lichten Weite des Felgenbettes 15 zwischen den Felgenhörnern 14, während der breitere äussere Abschnitt hier so gestaltet ist, dass die äussere Breite des Reifenabschnitts 18 der äusseren Felgenbreite im Bereich der Felgenhörner 14 entspricht. Im Längsschnitt nach Fig. 1 hat der Reifen daher einen etwa T-förmigen Querschnitt. Der äussere Abschnitt 18 ist glattflächig, die Lauffläche 19 – wie aus Fig. 1 ersichtlich – leicht ballig. Im übrigen besteht der Reifen aus einem hochabriebfesten Polyurethan (PU) mit einer Härte von vorzugsweise etwa 80 bis 90 Shore.

Um diesen Reifen in besonderer Weise elastisch zu gestalten, besitzt er – und zwar ausschliesslich innerhalb des inneren Abschnittes 17 – eine Vielzahl von in Umfangsrichtung in gleichmässigen Abständen angeordneten Ausnehmungen, die beispielsweise kreisförmig (20), dreieckförmig (21), rechteckförmig (23) oder bohnenförmig (24) als in sich geschlossen umrandete Öffnungen ausgeführt sein können oder die, wie die Ausnehmungen 22, nach innen derart geöffnet ausgebildet sein können, dass der Wandbereich 22a einer Ausnehmung 22 Flächenbestandteil der Innenfläche 25 des Reifens ist.

Insbesondere bei denjenigen Ausführungen, bei denen die Ausnehmungen 20, 21, 23 und 24 mit einer in sich geschlossenen inneren Umfangsfläche versehen sind, sollten die Stege 26 bis 29 relativ dünn ausgeführt sein. Ebenfalls dünn sollte der zwischen den Ausnehmungen und der Innenfläche 25 verbleibende Ringsteg 30 sein.

Wie aus Fig. 1 ersichtlich, befinden sich die Ausnehmungen (hier 20 und 22) vollständig innerhalb des von den Felgenhörnern 14 begrenzten Felgenbettes 15. Es können daher in die den Reifen im inneren Abschnitt 18 vollständig durchsetzenden Ausnehmungen keine Verunreinigungen, Steinchen, Staub oder sonstige Partikel eintreten und die Federungseigenschaften des Reifens mindern oder aufheben. Damit ist zugleich ein stets einwandfreier und vor allem auch gleichmässiger Radlauf gewährleistet.

Sofern die Stege nicht im wesentlichen radial angeordnet sind, wie hier die Stege 27 und 28, so verlaufen diese alternierend unter etwa gleich grossen Neigungswinkeln unterschiedlicher Richtung bezüglich der Radialen R, wodurch ebenfalls eine im wesentlichen rein radiale, jedenfalls symmetrische Einfederung des Reifens gewährleistet bleibt.

Die Federwirkung bei den Ausnehmungen 22 wird durch ein Ausweichen der hier relativ dicken Stege 31 in Umfangsrichtung während der Reifenkompression erreicht.

**Patentansprüche**

1. Laufrolle für Apparate, Möbel od. dgl. mit mindestens einem auf eine Radfelge (13) aufgezogenen Reifen (16), der von einer Vielzahl von radachsparallelen Ausnehmungen (20 bzw. 21 bzw. 23 bzw. 24) durchsetzt ist, deren Wände bis nahe an die Reifen-Innenfläche (25) herangeführt sind, dadurch gekennzeichnet, dass der Reifen (16) aus einem hochabriebfesten Elastomer wie Polyurethan (PU) besteht und die Ausnehmungen (20 bzw. 21 bzw. 23 bzw. 24) ausschliesslich innerhalb seines im Umfangsbereich der Felgenhörner (14) angeordneten Abschnitts (17) vorgesehen sind.

2. Laufrolle für Apparate, Möbel od. dgl. mit mindestens einem auf eine Radfelge (13) aufgezogenen Reifen (16), der von einer Vielzahl von radachsparallelen Ausnehmungen (22) durchsetzt ist, dadurch gekennzeichnet, dass der Reifen (16) aus einem hochabriebfesten Elastomer wie Polyurethan (PU) besteht und die Ausnehmungen (22), deren Wände (22a) Bestandteil der Reifen-Innenfläche (25) sind, ausschliesslich innerhalb seines im Umfangsbereich der Felgenhörner (14) angeordneten Abschnitts (17) vorgesehen sind.

3. Laufrolle nach Anspruch 1 oder 2, dadurch gekennzeichnet, dass die in radialer Richtung gemessene Wandstärke des zwischen den Felgenhörnern (14) liegenden Reifenabschnitts (17) grösser oder höchstens gleich der Hälfte der gesamten Reifenwandstärke ist.

4. Laufrolle nach einem der Ansprüche 1 bis 3, dadurch gekennzeichnet, dass die zwischen je zwei Ausnehmungen (z.B. 20) angeordneten Stege (26) im wesentlichen radial angeordnet sind.

5. Laufrolle nach einem der Ansprüche 1 bis 3, dadurch gekennzeichnet, dass die zwischen je zwei Ausnehmungen (z.B. 21) angeordneten Stege (27, 28) alternierend unter etwa gleich grossen Neigungswinkeln unterschiedlicher Richtung bezüglich der Radialen (R) angeordnet sind.

6. Laufrolle nach einem der Ansprüche 1 bis 5, dadurch gekennzeichnet, dass der elastomere Reifenwerkstoff eine Härte von 80 bis 90 Shore aufweist.

## Revendications

1. Roue de roulement pour appareils, meubles ou objets similaires, munie d'au moins un bandage (16) monté sur une jante de roue (13) et qui est traversé par de multiples évidements (20, 21, 23, 24) parallèles à l'axe de la roue et dont les parois arrivent jusqu'au voisinage de la surface intérieure (25) du bandage, caractérisée par le fait que le bandage (16) est formé d'un élastomère de grande résistance à l'usure comme le polyuréthanne (PU) et que les évidements (20, 21, 23, 24) sont prévus exclusivement à l'intérieur de sa partie (17) disposée dans la région circonférentielle des rebords de jante (14).

2. Roue de roulement pour appareils, meubles ou objets similaires, munie d'au moins un bandage (16) monté sur une jante de roue (13) et qui est traversé par de multiples évidements (22) parallèles à l'axe de la roue, caractérisée par le fait que le bandage (16) est formé d'un élastomère de grande résistance à l'usure comme le polyuréthanne (PU) et que les évidements (22), dont les parois (22a) font partie de la surface intérieure (25) du bandage, sont prévus exclusivement à l'intérieur de sa partie (17) disposée dans la région circonférentielle des rebords de jante (14).

3. Roue de roulement selon la revendication 1 ou 2, caractérisée par le fait que l'épaisseur de paroi, mesurée en direction radiale, de la partie de bandage (17) située entre les rebords de jante (14) est supérieure ou au maximum égale à la moitié de l'épaisseur totale de la paroi du bandage.

4. Roue de roulement selon l'une des revendications 1 à 3, caractérisée par le fait que les filets (26) disposés chacun entre deux évidements (par exemple 20) sont pratiquement disposés radialement.

5. Roue de roulement selon l'une des revendications 1 à 3, caractérisée par le fait que les filets (27, 28) disposés chacun entre deux évidements (par exemple 21) sont disposés alternativement sous des angles d'inclinaison à peu près d'égale grandeur et de sens différent relativement à la direction radiale (R).

6. Roue de roulement selon l'une des revendications 1 à 5, caractérisée par le fait que le matériau élastomère du bandage présente une dureté Shore de 80 à 90.

## Claims

1. Tread roller for apparatus, furniture or the like with at least one tyre (16) which is drawn on to a wheel rim (13) and through which passes a plurality of recesses (20 or 21 or 23 or 24) which are parallel to the wheel axle and the walls of which are taken near to the inner surface (25) of the tyre, characterised in that the tyre (16) consists of an elastomer of high abrasion resistance, such as polyurethane (PU), and the recesses (20 or 21 or 23 or 24) are provided solely within its portion (17) arranged in the peripheral region of the rim horns (14).

2. Tread roller for apparatus, furniture or the like, with at least one tyre (16) which is drawn on to a wheel rim (13) and through which passes a plurality of recesses (22) parallel to the wheel axle, characterised in that the tyre (16) consists of an elastomer of high abrasion resistance, such as polyurethane (pu), and the recesses (22), the walls (22a) of which are an integral part of the inner surface (25) of the tyre, are provided solely within its portion (17) arranged in the peripheral region of the rim horns (14).

3. Tread roller according to Claims 1 or 2, characterised in that the radially measured wall thickness of the tyre portion (17) located between the rim horns (14) is greater than or at most equal to half the total tyre wall thickness.

4. Tread roller according to one of Claims 1 to 3, characterised in that the webs (26) each located between every two recesses (e.g. 20) are arranged essentially radially.

5. Tread roller according to one of Claims 1 to 3, characterised in that the webs (27, 28) each located between every two recesses (e.g. 21) are arranged alternately at approximately equal angles of inclination of differing direction relative to the radial (R).

6. Tread roller according to one of Claims 1 to 5, characterised in that the elastomeric tyre material has a hardness of 80 to 90 Shore.

# FIG.1

# FIG.2